(19) 

Europäisches
Patentamt

European
Patent Office

Office européen
des brevets

(11) **EP 4 431 276 A1**

(12) **EUROPEAN PATENT APPLICATION**

(43) Date of publication:
**18.09.2024  Bulletin 2024/38**

(21) Application number: **24161915.4**

(22) Date of filing: **07.03.2024**

(51) International Patent Classification (IPC):
**B32B 27/12** *(2006.01)*     **B32B 5/02** *(2006.01)*
**B32B 7/02** *(2019.01)*     **B32B 7/12** *(2006.01)*
**B32B 27/34** *(2006.01)*

(52) Cooperative Patent Classification (CPC):
**B32B 5/022; B32B 5/024; B32B 5/028; B32B 7/02;**
**B32B 7/12; B32B 7/14; B32B 27/12; B32B 27/34;**
**E04B 1/625;** B32B 2250/02; B32B 2262/0261;
B32B 2270/00; B32B 2307/7246; B32B 2307/7376;
B32B 2307/75;                                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.03.2023   DE 102023106143**

(71) Applicant: **SAINT-GOBAIN ISOVER**
**92400 Courbevoie (FR)**

(72) Inventor: **Gröner, Wilhelm**
**68526 Ladenburg (DE)**

(74) Representative: **Bockhorni & Brüntjen**
**Partnerschaft**
**Patentanwälte mbB**
**Agnes-Bernauer-Straße 88**
**80687 München (DE)**

(54) **MOISTURE-ADAPTIVE VAPOUR BARRIER**

(57)    The invention relates to a moisture-adaptive vapour barrier having a functional layer in the form of a film made of a PA material and a reinforcing layer. Provision is made that the reinforcing layer consists of a further PA material, preferably of the same PA material as the functional layer.

EP 4 431 276 A1

**(Cont. next page)**

(52) Cooperative Patent Classification (CPC): (Cont.)
B32B 2419/00

**Description**

PRIOR ART

Moisture-adaptive vapour barriers for use in thermal insulation of buildings, in particular for thermal insulation measures in new buildings and in the renovation of old buildings are e.g. known from DE 195 14 420 C1 which discloses the generic type.

The moisture-adaptive vapour barrier described therein comprises a single-layer functional layer in the form of a polyamide film (PA film) having a film thickness in the range of 20 to 100 $\mu$m. Moisture-adaptive vapour barriers designed in this way are able to ensure water vapour exchange between room air and the interior of a component under various ambient conditions, but largely exclude damage to the building materials used as caused by moisture, by means of a moisture-adaptive water vapour diffusion resistance, expressed as an $s_d$ value. The $s_d$ value of the vapour barrier in DE 195 14 420 C1 is of the order of magnitude of 2 to 5 m diffusion-equivalent air layer thickness at a relative humidity surrounding the vapour barrier in the range of 30 to 50%, and is less than 1 m diffusion-equivalent air layer thickness at a relative humidity in the range of 60 to 80%. This means that there is a higher water vapour diffusion resistance in winter conditions than in summer conditions, and so the component dries out more effectively in summer without the moisture supply adversely affecting the materials and the building in winter conditions.

According to DE 195 14 420 C1, the functional layer can be present as a film or as a coating on a carrier material. Fibre-reinforced cellulose materials, films made of synthetic fibre spun-wovens or even perforated polyethylene films are proposed as carrier materials and, for their part, can have further coatings, e.g. with polymers such as modified polyvinyl alcohols, synthetic material dispersions, methyl cellulose, linseed oil alkyd, bone flax or protein derivatives. The carrier materials have a low water vapour diffusion resistance and serve, for instance, to protect the vapour barrier against mechanical effects, such as ripping.

Further developments of the moisture-adaptive vapour barrier include e.g. a sandwich-like structure of a composite film having a core layer made of PA and outer layers made of another material. EP 3 088 174 A1 describes e.g. a vapour barrier, in which two outer layers of one PA material absorb a layer of another moisture-adaptive material, which produces a greater spread of the $s_d$ value than is the case with a PA material.

WO 2014/118241 A1 describes a moisture-adaptive vapour barrier, in which a PA layer is combined with a non-polar layer made of PE. The vapour barrier is moisture-variable and, by reason of its layer combination, is directionally sensitive in relation to the property of water vapour permeability. This means that it can be used to dry out damp rooms, such as e.g. kitchens and bathrooms, without any undesired migration of the moisture into the structure. Although WO 2014/118241 A1 optionally makes provision for the application of a reinforcing layer which can consist, *inter alia*, of a PA-based non-woven, the special structure in accordance with the invention ensures that the vapour barrier always has (at least) a two-material characteristic.

The disadvantage of combining a vapour barrier with a functional layer made of PA and a reinforcing layer made of PE, PET or PP is the limited recyclability. The layers can no longer be easily separated from one another after use.

OBJECT OF THE INVENTION

It is an object of the invention to provide a moisture-adaptive vapour barrier having a functional layer made of a PA material which is mechanically reinforced and meets higher requirements in terms of its recyclability.

DISCLOSURE OF THE INVENTION

A moisture-adaptive vapour barrier in accordance with the invention consists of a functional layer in the form of a film made of a PA material and a reinforcing layer made of a further PA material, preferably the same PA material as that of the functional layer, optionally made of an auxiliary agent layer, in particular an adhesive layer, arranged between the functional layer and the reinforcing layer, and further optionally printing, i.e. a printed layer. Preferably, the side of the film-like functional layer facing away from the reinforcing layer is optionally printed.

The invention provides a composite material having a functional layer and a reinforcing layer, wherein the functional layer and the reinforcing layer are manufactured from polyamides. Preferably, the functional layer and the reinforcing layer consist of the same PA material. This advantageously enables the moisture-adaptive vapour barrier to be recycled according to type, i.e. high-quality material recycling to obtain a marketable secondary raw material. The functional layer in the form of the film made of the PA material is also referred to hereinafter as a PA film.

The PA film and the PA reinforcing layer form together preferably a flat, flexible and, in some embodiments, elastic structure which, however, is mechanically reinforced compared to a PA film alone. The PA reinforcing layer lies preferably fully against the PA film, i.e. the film and the reinforcement layer overlap one another. Accordingly, the moisture-adaptive vapour barrier can be understood as a layer structure, wherein the reinforcing layer is arranged on the film.

Sorting accuracy of the material for recyclability

The sorting accuracy, i.e. purity, of the starting material is decisive for the quality of the recyclate.

Therefore, the connection of the functional layer to the reinforcing layer is achieved preferably by a method without the use of an auxiliary agent, in particular by melting, welding, laminating or embossing. In this case, the optional auxiliary agent layer can advantageously be omitted.

In an alternative embodiment, the functional layer can be connected to the reinforcing layer with the aid of an auxiliary agent, in particular an adhesive, wherein the adhesive can be applied e.g. at selective points, in a linear manner or over the surface. Preferably, the auxiliary agent, in particular the adhesive, is used in an amount which does not hinder high-quality recycling, preferably $\leq 5$ g/m$^2$.

In terms of high-quality material recycling, it is preferable if the mass content of the optional adhesive and/or the optional printing is kept as low as possible. What is a preferred is a mass content of $\leq 10\%$, particularly $\leq 7\%$, especially $\leq 5\%$, $\leq 3\%$ or even $\leq 1\%$ in relation to the mass of the vapour barrier. Dispensing with adhesives and printing is particularly preferred with regard to material recycling.

In accordance with the invention, a vapour barrier which is moisture-adaptive in accordance with the invention thus has a functional layer made of a PA material and a reinforcing layer made of a further PA material, preferably the same PA material as the functional layer, optionally an auxiliary agent layer arranged between the functional layer and the reinforcing layer for connection thereof, and further optionally printing, wherein the vapour barrier consists of $\geq 90\%$, preferably $\geq 93\%$, particularly preferably $\geq 95\%$, even more preferably $\geq 97\%$, and very particularly preferably $\geq 99\%$ PA material.

Reinforcing layer

The reinforcing layer can be in the form of a non-woven layer, a woven, a woven mat and/or a woven mesh. In particular, the reinforcing layer can be a non-woven reinforced with a woven, a woven mat or a woven mesh.

It is routine in the art for a non-woven material to also be referred to as a "non-woven" and for a woven material to also be referred to as a "woven". In the context of the present disclosure, a non-woven is understood to be a flat and flexible structure. The structure elements of the non-woven form fibres of limited length. The fibres are typically intertwined, in particular matted. Typically, the fibres are not present in a regular shape as e.g. in a textile woven. The non-woven is preferably produced by needling, but can also be produced by means of e.g. hydro-entanglement or chemical processes. A person skilled in the art is familiar with a large number of options for producing non-wovens and wovens.

The reinforcing layer in the form of the non-woven layer made of the further PA material is also referred to hereinafter as the PA non-woven, and the reinforcing layer in the form of the woven, the woven mat and/or the woven mesh made of the further PA material is also referred to as the PA woven.

It should always be understood that the PA materials of the PA film, the PA non-woven and the PA woven can be different, but are preferably the same.

Properties of the material layers

Both the PA film and the PA non-woven and the PA woven have a moisture-variable $s_d$ value. However, by reason of the diffusion-openness of a non-woven as well as the woven, of which $s_d$ values are typically less than 0.05 m diffusion-equivalent air layer thickness, the moisture-variability of the PA non-woven or PA woven is negligible in comparison with the PA film. The moisture-adaptive vapour barrier can be used advantageously for thermal insulation of new buildings and for the renovation of old buildings, as already described in DE 195 14 420 C1. It does not demonstrate any other hygric behaviour than the embodiments described in DE 195 14 420 C1.

The material of the PA film is preferably a PA 3, PA 4, PA 6, PA 6.6, PA 4.6 or a combination thereof. In a particularly preferred manner, the material of the PA film is a PA 6 or PA 6.6 or a combination thereof.

The layer thickness of the PA film is preferably between 20 $\mu$m and 100 $\mu$m.

In particular, all films sorted according to type, as described in DE 195 14 420 C1, are suitable, in particular also a film which consists solely of polyamide 6, having a film thickness of 50 $\mu$m, as described in DE 195 14 420 C1.

The PA non-woven comprises non-woven fibres likewise made of a PA material, preferably PA 3, PA 4, PA 6, PA 6.6 or PA 4.6 or a combination thereof. PA 6 or PA 6.6 or a combination thereof is particularly preferred in this case.

The layer thickness of the PA non-woven is preferably between 150 $\mu$m and 2000 $\mu$m.

The PA woven consists of (continuous) woven fibres of a PA material, preferably PA 3, PA 4, PA 6, PA 6.6 or PA 4.6 or a combination thereof. PA 6 or PA 6.6 or a combination thereof is particularly preferred in this case.

The layer thickness of the PA woven is preferably in the same order of magnitude as that of the PA non-woven and amounts to 100 $\mu$m to 2000 $\mu$m.

Properties of the vapour barrier

The materials and layer thicknesses of the PA non-woven, PA woven and PA film are preferably selected in such a way that the $s_d$ value of the moisture-adaptive vapour barrier is preferably moisture-variable between 0.1 and 7 m, particularly preferably between 0.3 and 5 m equivalent air layer thickness, and in particular variable in relation to the average relative air humidity. The $s_d$ value is measured in accordance with DIN EN ISO 12572:2017-05. The $s_d$ value is defined in a known manner by the water vapour diffusion resistance number $\mu$ and the layer thickness used:

$$s_d \text{ value [m]} = \text{water vapour diffusion resistance number } \mu \times \text{layer thickness [m]}.$$

The vapour barrier is provided e.g. as a roll having a width of 0.2 m to 2 m, preferably 0.5 to 1.5 m. The length can be e.g. 10 to 50 m, preferably 20 to 40 m. Preferably, the vapour barrier is provided as a roll having a web area of 30 to 60 $m^2$.

The weight per unit area of the vapour barrier is preferably between 50 and 500 $g/m^2$, preferably between 70 and 100 $m^2$, particularly preferably about 80 $g/m^2$. Therefore, the vapour barrier is also suitable for use in pitched roofs.

The maximum tensile force of the vapour barrier is preferably greater than 80 N, more preferably > 110 N. The maximum tensile force is determined in accordance with DIN EN 13984:2013-05. Therefore, the vapour barrier is advantageously also suitable for use in pitched roofs.

According to one embodiment, the moisture-adaptive vapour barrier has a UV additive. In one embodiment, the moisture-adaptive vapour barrier is provided e.g. with a coating which permits UV-resistance of at least three months of direct radiation. The UV additive is added in a small amount so that it does not hinder high-quality recycling, preferably the proportion of UV additive is less than 0.2% of the total PA mass of the vapour barrier.

Alternative functional layers

According to further aspects of the invention, the material of the functional layer is not restricted to PA.

In principle, the functional layer can be formed from any material with a moisture-adaptive $s_d$ value, in particular e.g. ionomers, EVOH, PVOH or generally a polar material. In terms of high-quality material recycling, provision is made in accordance with the invention that the reinforcing layer consists of the same material or at least of the same material class as the functional layer. The moisture-adaptive vapour barrier can otherwise be designed as described.

Examples of laminates which contain ionomers for use in a moisture-adaptive vapour barrier are disclosed in EP 1 372 956 A1. In practice, ionomers are marketed by Dupont e.g. under the brand Surlyn. Examples of moisture-adaptive vapour barriers having functional layers which contain EVOH and/or PVOH are disclosed in US 2007/015424 A1. Examples of other polar materials for use in a moisture-adaptive vapour barrier are polyethylene (PE) films or polypropylene (PP) films with acrylic acid as a polar component.

According to still further aspects of the invention, a vapour barrier (not moisture-adaptive) can also consist of a functional layer in the form of a film made of a material, in particular e.g. PE or PP, and a reinforcing layer made of the same material, optionally an auxiliary agent layer arranged between the functional layer and the reinforcing layer for connection thereof, and further optionally printing.

The above statements relating to the design of the reinforcing layer as a (optionally reinforced) non-woven layer, woven, woven mat and/or woven mesh, to the connection of the reinforcing layer to the functional layer, with or without auxiliary agents, to the layer thickness, etc., and in particular statements concerning the purity of the vapour barrier also apply accordingly to the further aspects with functional layers made of materials other than PA.

**Claims**

1.  A moisture-adaptive vapour barrier consisting of a functional layer in the form of a film made of a PA material and a reinforcing layer made of a further PA material, preferably the same PA material as the functional layer, and for connection thereof, optionally an auxiliary agent layer arranged between the functional layer and the reinforcing layer, and further optionally printing.

2.  The moisture-adaptive vapour barrier as claimed in claim 1, **characterised in that** the functional layer is connected to the reinforcing layer by a method without the use of an auxiliary agent, in particular by melting, welding, laminating or embossing.

3.  The moisture-adaptive vapour barrier as claimed in any one of the preceding claims, **characterised in that** the mass content of the optional auxiliary agent, in particular the adhesive, and/or the optional printing is ≤ 10%, particularly ≤ 7%, especially ≤ 5%, preferably ≤ 3%, more particularly ≤ 1% in relation to the mass of the vapour barrier.

4. The moisture-adaptive vapour barrier as claimed in any one of the preceding claims, **characterised in that** the reinforcing layer is present in the form of a non-woven layer, a woven, a woven mat and/or a woven mesh.

5. The moisture-adaptive vapour barrier as claimed in claim 4, **characterised in that** the reinforcing layer is a non-woven which is reinforced with a woven, a woven mat or a woven mesh.

6. The moisture-adaptive vapour barrier as claimed in any one of the preceding claims, **characterised in that** the material of the PA film and/or the PA non-woven and/or the PA woven is in each case a PA 3, PA 4, PA 6, PA 6.6, PA 4.6, particularly preferably a PA 6 or PA 6.6 or a combination thereof.

7. The moisture-adaptive vapour barrier as claimed in claim 6, **characterised in that** the material of the PA film and/or the PA non-woven and/or the PA woven is the same polyamide or the same combination.

8. The moisture-adaptive vapour barrier as claimed in any one of the preceding claims, **characterised in that** the $s_d$ value of the moisture-adaptive vapour barrier is moisture-variable between 0.1 and 7 m, particularly preferably between 0.3 and 5 m equivalent air layer thickness.

Europäisches Patentamt

European Patent Office

Office européen des brevets

**EUROPEAN SEARCH REPORT**

Application Number

EP 24 16 1915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2017 105028 A1 (COROPLAST FRITZ MUELLER GMBH & CO KG [DE]) 28 September 2017 (2017-09-28) | 1,3,4,6,8 | INV. B32B27/12 B32B5/02 |
| Y | * claim 1 * * figure 1 * * paragraphs [0012] - [0024] * | 5 | B32B7/02 B32B7/12 B32B27/34 |
| X | US 2007/017590 A1 (TIGERFELDT STAFFAN [SE]) 25 January 2007 (2007-01-25) | 1-4,6-8 | |
| Y | * claims 1, 4, 12, 14 * * paragraphs [0048] - [0050] * | 5 | |
| A,D | DE 195 14 420 C1 (FRAUNHOFER GES FORSCHUNG [DE]; GIPS SCHUELE STIFTUNG [DE]) 6 March 1997 (1997-03-06) * claims 1-4, 6, 10 * | 1-8 | |
| Y | DE 10 2019 111483 A1 (BMI GROUP HOLDINGS UK LTD [GB]) 5 November 2020 (2020-11-05) * paragraphs [0044] - [0051] * | 5 | |

TECHNICAL FIELDS SEARCHED (IPC)

B32B
E04B

The present search report has been drawn up for all claims

| Place of search | Date of completion of the search | Examiner |
|---|---|---|
| The Hague | 9 July 2024 | Nowak, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 4 431 276 A1

## ANNEX TO THE EUROPEAN SEARCH REPORT
## ON EUROPEAN PATENT APPLICATION NO.

EP 24 16 1915

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | Publication date |
|---|---|---|---|
| DE 102017105028 A1 | 28-09-2017 | DE 102017105028 A1 | 28-09-2017 |
| | | DE 202016101644 U1 | 27-06-2017 |
| US 2007017590 A1 | 25-01-2007 | AT E475841 T1 | 15-08-2010 |
| | | AU 2004281354 A1 | 28-04-2005 |
| | | BR PI0415481 A | 26-12-2006 |
| | | CA 2542294 A1 | 28-04-2005 |
| | | CN 1886619 A | 27-12-2006 |
| | | DK 1687561 T3 | 08-11-2010 |
| | | EA 200600789 A1 | 27-10-2006 |
| | | EP 1687561 A1 | 09-08-2006 |
| | | ES 2349141 T3 | 28-12-2010 |
| | | JP 4708356 B2 | 22-06-2011 |
| | | JP 2007508511 A | 05-04-2007 |
| | | KR 20060105000 A | 09-10-2006 |
| | | SE 525985 C2 | 07-06-2005 |
| | | US 2007017590 A1 | 25-01-2007 |
| | | WO 2005038330 A1 | 28-04-2005 |
| DE 19514420 C1 | 06-03-1997 | AT E197832 T1 | 15-12-2000 |
| | | AU 695567 B2 | 13-08-1998 |
| | | BR 9608141 A | 09-02-1999 |
| | | CA 2215502 A1 | 24-10-1996 |
| | | CN 1185821 A | 24-06-1998 |
| | | CZ 292207 B6 | 13-08-2003 |
| | | DE 19514420 C1 | 06-03-1997 |
| | | DK 0821755 T3 | 05-03-2001 |
| | | EA 199700245 A1 | 25-06-1998 |
| | | EE 9700246 A | 15-04-1998 |
| | | EP 0821755 A1 | 04-02-1998 |
| | | ES 2153958 T3 | 16-03-2001 |
| | | JP 4471403 B2 | 02-06-2010 |
| | | JP H11504088 A | 06-04-1999 |
| | | KR 19980703897 A | 05-12-1998 |
| | | NO 308548 B1 | 25-09-2000 |
| | | NZ 305338 A | 23-12-1998 |
| | | PL 322730 A1 | 16-02-1998 |
| | | RO 116102 B1 | 30-10-2000 |
| | | SI 0821755 T1 | 30-06-2001 |
| | | SK 142097 A3 | 04-02-1998 |
| | | TR 199701201 T1 | 21-02-1998 |
| | | UA 28098 C2 | 16-10-2000 |
| | | WO 9633321 A1 | 24-10-1996 |
| DE 102019111483 A1 | 05-11-2020 | DE 102019111483 A1 | 05-11-2020 |
| | | DK 3744519 T3 | 26-02-2024 |

For more details about this annex : see Official Journal of the European Patent Office, No. 12/82

page 1 of 2

8

## ANNEX TO THE EUROPEAN SEARCH REPORT
## ON EUROPEAN PATENT APPLICATION NO.

EP 24 16 1915

This annex lists the patent family members relating to the patent documents cited in  the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | | Publication date |
|---|---|---|---|---|
| | | EP | 3744519 A1 | 02-12-2020 |
| | | ES | 2972742 T3 | 14-06-2024 |
| | | FI | 3744519 T3 | 13-03-2024 |
| | | PL | 3744519 T3 | 29-04-2024 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19514420 C1
- EP 3088174 A1
- WO 2014118241 A1
- EP 1372956 A1
- US 2007015424 A1